# EUROPEAN PATENT SPECIFICATION

(11) **EP 1 758 962 B1**
(45) Date of publication and mention of the grant of the patent: **30.10.2013**
(21) Application number: 05753385.3
(22) Date of filing: 21.06.2005
(51) Int. Cl.: C09G 1/02, C09K 3/14, B24B 37/04

(54) **POLISHING METHOD FOR GLASS SUBSTRATE, AND GLASS SUBSTRATE**
POLIERVERFAHREN FÜR GLASSUBSTRAT SOWIE GLASSUBSTRAT
SUBSTRAT DE VERRE ET MODE DE POLISSAGE

(30) Priority: 22.06.2004 JP 2004184148
(43) Date of publication of application: 07.03.2007
(73) Proprietor: Asahi Glass Company, Limited, Chiyoda-ku Tokyo 100-8405 (JP)
(72) Inventor: KOJIMA, Hiroshi c/o Asahi Fine Materials, Hitachinaka-shi, Ibaraki 3120063 (JP); MISHIRO, Hitoshi c/o Asahi Glass, Takasago-shi, Hyogo 6768655 (JP); ITO, Masabumi, c/o Asahi Glass Company, Limited, Yokohama-shi, Kanagawa 2218755 (JP)
(74) Representative: Müller-Boré & Partner Patentanwälte
(86) International application number: PCT/JP2005/011697
(87) International publication number: WO 2005/123857

(56) References cited:
- EP-A- 0 664 540
- WO-A1-01/85868
- US-A1- 2004 035 153
- US-B1- 6 582 279
- PATENT ABSTRACTS OF JAPAN vol. 2003, no. 11, 5 November 2003 (2003-11-05) & JP 2003 211351 A (KAO CORP), 29 July 2003 (2003-07-29) cited in the application

## Description

The present invention relates to a polishing method for a glass substrate, and a glass substrate. Particularly, it relates to a polishing method for a glass substrate for e.g. a reflective mask to be used for EUV (Extreme Ultra Violet) lithography in a process for producing semiconductors, and a glass substrate.

Heretofore, in lithography, an exposure apparatus has been widely used to form integrated circuits by transferring fine circuit patterns on wafers. Along with the progress in high integration, high speed and high functionality of integrated circuits, microsizing of integrated circuits has been progressing, and the exposure apparatus is required to form a circuit pattern on a wafer in a long focal depth with high resolution and shortening of the wavelength of the exposure light source is being advanced. The exposure light source has been advanced from the conventional g-line (wavelength: 436 nm), i-line (wavelength: 365 nm) or KrF excimer laser (wavelength: 248 nm) to Arf excimer laser (wavelength: 193 nm) which is now being used. Further, in order to meet integrated circuits of the next generation wherein the line width of circuits will be at most 100 nm, it is considered highly promising to employ F2 laser (wavelength: 157 nm) as an exposure light source, but even this is considered to meet only the requirement for the generation where the line width is 70 nm.

Further, in such a technical trend, a lithography technique employing EUV light (extreme ultraviolet light) has attracted an attention, as an exposure light source for the next generation, as it is considered to be useful over plural generations of 45 nm and thereafter. EUV light means light having a wavelength within the soft X-ray region or a vacuum ultraviolet region, and specifically, it is light having a wavelength of from 0.2 to 100 nm. At present, use of 13.5 nm is being studied as a light source for lithography. The exposure principle of such EUV lithography (hereinafter referred to simply as "EUVL") is the same as in conventional lithography in that a masked pattern is transferred by means of a projection optical system, but in the energy region of EUV light, no material is available which permits the light to pass therethrough, whereby a dioptric system can not be used, and it will be necessary to employ a catoptric system. (Patent Document 1).

A mask to be used for EUVL, is basically constituted by (1) a substrate, (2) a reflective multilayer film formed on the substrate and (3) an absorber layer formed on the reflective multilayer film. As such a reflective multilayer film, one having a structure such that plural materials having different refractive indices to the wavelength of the exposure light are periodically laminated in a nm order, is used, and as a typical material, Mo and Si are known. Further, for the absorber layer, Ta and Cr are being studied. For the substrate, a material is required to have a low thermal expansion coefficient so that no strain will be formed even when irradiated with EUV light, and glass or crystallized glass having a low thermal expansion coefficient is being studied. The substrate is prepared by polishing a base material of such glass or crystallized glass with high precision, followed by cleaning.

In general, a method for polishing e.g. a substrate for a magnetic recording medium or a substrate for a semiconductor to have a highly smooth surface, is known. For example, Patent Document 2 discloses a method for polishing a substrate to be polished by means of a polishing liquid composition comprising water, an abrasive and an acid compound, having a pH being acidic and having a concentration of the abrasive being less than 10 wt%, as a polishing method to reduce the surface roughness of the object to be polished after the polishing and to reduce surface defects such as microprotrusions or polishing scars, with respect to final polishing of memory hard disks or polishing of e.g. a substrate for semiconductor devices. And, as the abrasive, aluminum oxide, silica, cerium oxide, zirconium oxide or the like, is exemplified, and further as the acid to make the pH acidic, nitric acid, sulfuric acid, hydrochloric acid or an organic acid or the like, is exemplified.

Further, Patent Document 3 discloses a method wherein a surface of a substrate for a magnetic disk is softened with a corrosive agent having the pH adjusted by adding e.g. nitric acid to aluminum nitrate, and then the softened layer is removed by using soft colloidal particles such as colloidal silica.
Patent Document 1: JP-A-2003-505891
Patent Document 2: JP-A-2003-211351
Patent Document 3: JP-A-7-240025

However, in the polishing method disclosed in Patent Document 2, in a case where silica particles are to be used as the abrasive, in order to improve the polishing speed, their particle sizes are made to be within a wide range of from 1 to 600 nm, and a particularly preferred range is specified to be from 20 to 200 nm. And, with a view to reducing microprotrusions and from the viewpoint of economical efficiency, the concentration of silica particles is defined to be less than 10 wt%, most preferably at most 7 wt%. Namely, it is considered that in Patent Document 2, if the concentration of silica particles is increased, microprotrusions will also be increased, and therefore, the concentration is reduced as mentioned above, and instead, the particle sizes of the silica particles are made to be from 1 to 600 nm to attain the desired polishing speed. As a result, with respect to the surface smoothness of the substrate for a magnetic disk, polished by this abrasive, although microprotrusions are reduced, the surface roughens (Ra) is limited, and Ra in Examples is from 0.2 to 0.3 nm. Namely, by the polishing method disclosed in Patent Document 2, it is only possible to attain polishing at a level of the surface roughness (Ra) being from 0.2 to 0.3 nm.

With such surface smoothness of a level of the surface roughness (Ra) being from 0.2 to 0.3 nm, it is difficult to use such a substrate as a glass substrate for a reflective mask to be used for EUVL, particularly as glass substrate required to have extremely high surface precision and smoothness, like a reflective mask to be used for an optical system of an exposure apparatus for the production of semiconductors for generations of 45 nm and thereafter.

Further, the average surface roughness of the disk substrates obtained by the polishing method disclosed in Patent Document 3, is 0.158 nm at best as shown in Examples, and such a surface roughness is likewise inadequate for a reflective mask to be used for an optical system of an exposure apparatus for the production of semiconductors for generations of 45 nm and thereafter.

US 6,582,279 discloses an apparatus and method for reclaiming a disk substrate for use in a data storage device. WO-A-01/85868 discloses a polishing composition for aluminum disks having a SiO₂ concentration of 0.5 to 50% by weight containing colloidal silica particle groups having different monomodal numerical particle size distribution therein or substrates having silica on the surface thereof, in order to obtain a polished surface having a small mean waviness.

The present invention has been made in view of the above problems, and it is an object of the invention to provide a method for polishing a glass substrate required to have extremely high surface smoothness and surface precision like a glass substrate for a reflective mask to be used for EUVL, and a glass substrate having a small surface roughness as compared with the conventional substrate.

In order to solve the above problems, the present inventors have conducted an extensive study on polishing of a glass substrate for a reflective mask which can be used for an optical system of an exposure apparatus for the production of semiconductors for generations of 45 nm and thereafter and as a result, have found it possible to polish the substrate to have a surface having small surface roughness by carrying out the polishing by adjusting the pH of a polishing slurry comprising water and colloidal silica having a particle size smaller than conventional colloidal silica, to be acidic. The present invention has been accomplished on the basis of this discovery.

Namely, the present invention provides the following polishing method whereby a glass substrate can be polished with high surface precision, and the following glass substrate.
(1) A polishing method for a glass substrate to be used for an optical component of an EUV-exposure apparatus for semiconductor production characterized by polishing a surface of a glass substrate containing SiO₂ as the main component, with a polishing slurry comprising water and colloidal silica having an average primary particle size of less than 20 nm and having the pH adjusted to be within a range of from 0.5 to 4, the content of the colloidal silica being from 10 to 30 mass% in the polishing slurry, so that the surface roughness Rms will be at most 0.15 nm as measured by an atomic force microscope, wherein the surface of a glass substrate is preliminarily subjected to preliminary polishing and thereafter subjected to final polishing with said polishing slurry, and wherein the polishing is carried out so that the number of concave defects with widths of at least 60 nm will be not more than 3 within an area of 142 mm × 142 mm.
(2) The polishing method for a glass substrate to be used for an optical component of an EUV-exposure apparatus for semiconductor production according to the above (1), with a polishing slurry having the pH adjusted to be within a range of from 1 to 4.
(3) The polishing method for a glass substrate to be used for an optical component of an EUV-exposure apparatus for semiconductor production according to the above (1) or (2), wherein the polishing slurry further comprises an acid.
(4) The polishing method for a glass substrate to be used for an optical component of an EUV-exposure apparatus for semiconductor production according to any one the above (1) to (3), wherein the water is pure water or ultrapure water wherein the number of fine particles of at least 0.1 µm as measured by a light scattering system employing a laser beam or the like, is substantially at most 1/ml.
(5) The polishing method for a glass substrate to be used for an optical component of an EUV-exposure apparatus for semiconductor production according to any one of the above (1) to (4), wherein the glass substrate after polishing with the polishing slurry, is washed with a hot solution of sulfuric acid and hydrogen peroxide solution and further with a neutral surfactant solution.
(6) A glass substrate containing SiO₂ as the main component, polished by the polishing method as defined in any one of the above (1) to (5).

According to the present invention, a glass substrate can be polished to have a smooth surface having extremely small surface roughness and high surface precision, and thus it is possible to obtain a glass substrate having excellent smoothness and high precision, which can meet the requirement for e.g. a reflective mask to be used for an optical system of an exposure apparatus for the production of semiconductors for the generations for 45 nm and thereafter.

Further, it becomes possible to increase the concentration of colloidal silica contained in the polishing slurry, whereby a glass substrate can be efficiently polished at a desired polishing speed.
Fig. 1 is an enlarged partial plan view of a polished glass substrate.
Fig. 2 is a view showing the surface roughness taken along line A-A in Fig. 1.

### MEANINGS OF SYMBOLS

1: concave defect
2: convex defect
3: glass substrate

In the present invention, as the glass to be polished for a glass substrate, glass having a small thermal expansion coefficient and a small fluctuation in the thermal expansion coefficient, will be used in order to obtain a glass substrate useful as a reflective mask for EUVL, which can meet the requirement for high integration and high precision of integrated circuits. Specifically, low expansion glass having a thermal expansion coefficient of 0±30 ppb/°C at 20°C is preferred, and particularly preferred is ultralow expansion glass having a thermal expansion coefficient of 0±10 ppb/°C at 20°C. If the above reflective mask is made of glass having such a small thermal expansion coefficient, a highly precise circuit pattern can be satisfactorily transferred to sufficiently meet the temperature change in the process for producing semiconductors.

As such low expansion glass or ultralow expansion glass, quartz glass containing SiO₂ as the main component may be used. Specifically, low expansion glass or low expansion crystal glass, such as synthetic quartz glass containing SiO₂ as the main component and further containing TiO₂, ULE (registered trademark; Corning cord 7972) or ZERODUR (registered trademark of German Schott Co.) may, for example, be mentioned. A glass substrate is polished usually in the form of a tetragonal plate, but the shape is not limited thereto.

The polishing method of the present invention is carried out by means of a polishing slurry comprising colloidal silica and water and having the pH adjusted to be within a range of from 0.5 to 4, preferably from 1 to 4. Namely, in the present invention, a glass substrate is polished by a polishing slurry comprising colloidal silica (silica particles) as an abrasive, an acid to adjust the pH, and water to form a slurry. Here, the average primary particle size of the colloidal silica is less than 20 nm, preferably less than 15 nm. The lower limit of the average primary particle size of the colloidal silica is not limited. However, with a view to improving the polishing efficiency, at least 5 nm is preferred, and more preferred is at least 10 nm. If the average primary particle size of the colloidal silica exceeds 50 nm, it tends to be difficult to polish the glass substrate to have the desired surface roughness, and there may be a case where it is difficult to obtain a glass substrate useful for an optical component of an exposure apparatus for the production of semiconductors for generations of 45 nm and thereafter. Further, from the viewpoint of carefully controlling the particle size, preferably, the colloidal silica does not contain secondary particles formed by agglomeration of primary particles, as far as possible. In a case where secondary particles are contained, their average particle size is preferably at most 70 nm. Here, the particle size of the colloidal silica in the present invention is one obtained by measuring an image of from 15 to 105×10³ magnifications by mean of SEM (scanning electron microscope).

Further, the content of the colloidal silica is from 10 to 30 mass% in the polishing slurry, preferably from 18 to 25 mass%, particularly preferably from 18 to 22 mass%. If the content of the colloidal silica is less than 10 mass%, the polishing efficiency tends to be low, and the polishing time tends to be long, such being undesirable. Especially in the present invention, as mentioned above, colloidal silica of particles having a small average primary particle size is used as the abrasive, and if the content of the colloidal silica is less than 10 mass%, it is likely that the polishing efficiency tends to be poor, and economical polishing tends to be difficult. On the other hand, if the content of the colloidal silica exceeds 30 mass%, the amount of the colloidal silica to be used, increases, such being undesirable from the viewpoint of the economical efficiency or from the viewpoint of the washing efficiency.

In the present invention, the polishing slurry is adjusted to have a pH of from 0.5 to 4, preferably from 1 to 4, more preferably from 1 to 3, particularly preferably from 1.8 to 2.5, by an acid, as mentioned above. The purpose of adjusting the pH of the polishing slurry in the present invention, is substantially the same as in acidic polishing as heretofore carried out, and by adjusting the polishing slurry to be acidic at such a level, it becomes possible that the surface of the glass substrate can be chemically and mechanically polished. Namely, if mechanically polished with an acidic polishing slurry, convex portions of the glass surface will be softened by the acid in the polishing slurry, whereby the convex portions can easily be removed by mechanical polishing. Thus, the polishing efficiency will be improved, and at the same time, the glass powder or glass waste removed by the polishing is softened, whereby formation of new scratches by such glass waste or the like can be prevented. Thus, the method of adjusting the pH of the polishing slurry to be acidic is effective as a method for effectively polishing the glass substrate with good smoothness. If the pH is less than 0.5, the acid tends to be too strong, such being problematic from the viewpoint of corrosion of the polishing machine. If the pH is less than 1, corrosion of the polishing machine may not be a problematic level, but handling efficiency of the polishing slurry tends to be poor. On the other hand, if the pH exceeds 4, the above-mentioned chemical polishing effect to glass, tends to be low, such being undesirable.

In the present invention, the above pH adjustment of the polishing slurry can be carried out by using acids selected from inorganic acids or organic acids alone or in combination. Conveniently, many inorganic acids or organic acids known as pH adjusting agents for polishing slurries for acidic polishing may suitably be selected for use. For example, as an inorganic acid, nitric acid, sulfuric acid, hydrochloric acid, perchloric acid or phosphoric acid may, for example, be mentioned, and among them, nitric acid is preferred from the viewpoint of the handling efficiency. Here, an acid highly corrosive to glass such as hydrofluoric acid, may not be used, since scars will be enlarged. As an organic acid, oxalic acid or citric acid may, for example, be mentioned.

In the present invention, as the water to be used for adjusting the concentration of the colloidal silica or for forming a slurry, pure water or ultrapure water having foreign particles removed, is preferably used. Namely, irrespective of the material or shape of the foreign particles (fine particles) removed, the water is preferably pure water or ultrapure water wherein the number of fine particles having the maximum diameters of at least 0.1 µm as measured by a light scattering system employing a laser beam or the like, is substantially at most 1/ml. If the water contains more than 1/ml of foreign particles of at least 0.1 µm, such foreign particles may function as one type of abrasive during the polishing and may impart surface defects such as scratch marks or pits to the polished surface of glass, whereby it tends to be difficult to obtain a polished surface of high quality excellent in smoothness. Here, such foreign particles in water may be removed by filtration or ultrafiltration by means of a membrane filter, but the removal method is not limited thereto.

In the present invention, polishing of a glass substrate may be carried out by supplying the polishing slurry having the average primary particle size and concentration of the colloidal silica and the pH adjusted, to a polishing apparatus. Although not shown in the drawings, this polishing apparatus is designed so that the glass substrate is sandwiched from both sides under a prescribed load by polishing disks provided with a polishing tool such as a nonwoven fabric or a polishing cloth, and the polishing disks are relatively rotated against the glass substrate while the above polishing slurry is supplied to the polishing tool, to carry out the polishing. In this case, the amount of the polishing slurry to be supplied, the polishing load and the rotational speed of the polishing disks are suitably determined taking the polishing speed, the polishing precision, etc. taken into consideration.

The polishing method of the present invention is suitable particularly for final polishing which is carried out at the final stage in polishing a glass substrate by a plurality of polishing steps. Accordingly, before the polishing by the method of the present invention, the glass substrate is preliminarily subjected to abrasion processing to have a predetermined thickness and at the same time subjected to preliminary polishing so that the surface roughness will be at most a prescribed level. This preliminary polishing may be carried out in one polishing step or in a plurality of polishing steps. The polishing method is not particularly limited. For example, a plurality of double side lapping machines may be linked in series, so that a glass substrate is sequentially polished by such lapping machines while the abrasive or polishing conditions are suitably changed, whereby the glass substrate can be preliminarily polished to a prescribed thickness and surface roughness. The surface roughness (Rms) by this preliminary polishing is, for example, preferably at most 3 nm, more preferably at most 1.0 nm, further preferably at most 0.5 nm.

Further, the glass substrate finally polished by the polishing method of the present invention will be washed. By this washing, an abrasive, polished glass waste or other foreign particles attached to the surface of the polished glass substrate can be removed to have the surface cleaned, and further, the surface of the glass substrate will be neutralized. Thus, this washing is important as a step following the polishing. If this washing is inadequate, not only the subsequent inspection will be troublesome, but also the required quality as a glass substrate will not be obtained. As one of preferred washing methods, a method may, for example, be mentioned wherein the glass substrate is firstly washed with a hot solution of sulfuric acid and hydrogen peroxide solution, then rinsed with water, and then washed with a neutral surfactant solution. However, the washing method is not limited thereto, and other methods may be employed.

The glass substrate polished by the polishing method of the present invention has a surface roughness Rms of at most 0.15 nm, more preferably at most 0.10 nm, as measured by an atomic force microscope (hereinafter referred to as AFM). In the present invention, as mentioned above, by polishing a glass substrate by means of a polishing slurry containing colloidal silica having an average primary particle size of less than 20 nm and having the pH adjusted to be within a range of from 1 to 4, it is possible to obtain a highly fine smooth surface having a Rms of at most 0.15 nm. Here, as AFM, SPI3800N, manufactured by Seiko Instruments Inc. is used. If the surface roughness is larger than Rms being 0.15 nm, such a glass substrate will be unacceptable as a glass substrate for an optical component of an exposure apparatus for the production of semiconductors for generations of 45 nm and thereafter, such as a reflective mask or mirror for EUVL, where high integration and high precision will be strongly desired more than ever.

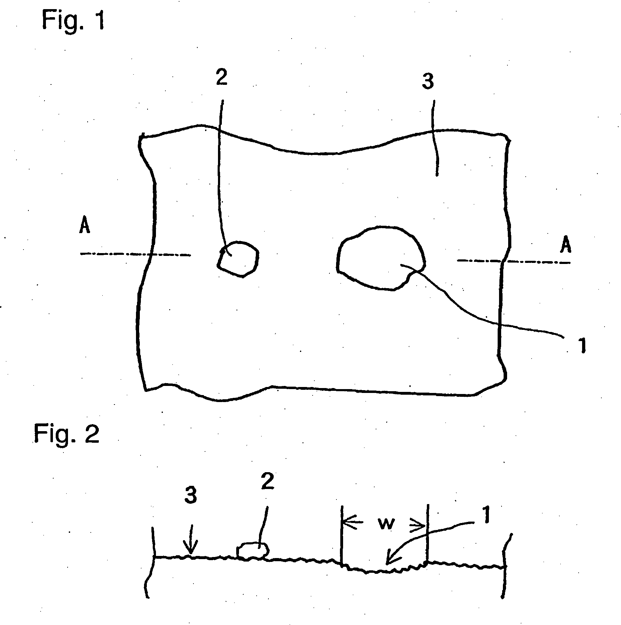

Fig. 1 is a schematic illustration by a plan view of a part of the surface of a glass substrate washed after final polishing with the polishing slurry, as observed by e.g. a surface inspecting machine M1350 (manufactured by Lasertec Corporation), and Fig. 2 is a view illustrating an example of the surface roughness, taken along line A-A in Fig. 1. As shown in Figs. 1 and 2, on the surface of the glass substrate 3 after polishing and washing, a concave defect 1 and a convex defect 2 are usually present in addition to the surface roughness Rms. The concave defect 1 is considered to be caused by the influence or deviation of the particle size of the abrasive, and a tendency is observed such that as the size becomes large, the shape of the defect increases, and the number of defects increases. Accordingly, it is effective to reduce the particle size of the abrasive (colloidal silica) with a view to reducing the size and number of such concave defects. Such concave defects 1 are formed in glass of the glass substrate 3 and will be permanent problematic defects which can not be removed by washing.

Whereas, a convex defect 2 may, for example, be an abrasive remaining after the washing or an impurity (foreign matter) contained in water. As different from the above concave defects 1, such convex defects can be reduced by changing the washing method or by carrying out the washing by using washing water having foreign particles sufficiently removed.

With a glass substrate of the present invention, the number of concave defects 1 with widths of at least 60 nm is not more than 3, preferably not more than 1, within an area of 142 mm × 142 mm. Further, it is preferred that substantially no convex defects 2 with widths of at least 60 nm will be present. Here, the width of a concave means the maximum diameter w of the concave defect 1 as shown in Figs. 1 and 2. The same applies to the width of the convex defect 2. If more than 3 concave defects 1 with widths of at least 60 nm are present within an area of 142 mm × 142 mm, not only the smoothness of the polished surface deteriorates, but also when a reflective multilayer film is formed on the surface, they will bring about irregularity defects on the film, such being undesirable.

Now, the present invention will be described in further detail with reference to Examples. However, it should be understood that the present invention is by no means restricted to such specific Examples.

### EXAMPLES

An ingot of synthetic quartz glass containing 7 mass% of TiO₂, produced by flame hydrolysis, was cut into a plate shape of 153.0 mm in length × 153.0 mm in width × 6.75 mm in thickness by means of an inside blade slicer to prepare 60 sheets of plate samples of synthetic quartz glass (hereinafter referred to as "sample substrates"). Then, they were chamfered by a commercially available NC chamfering machine using a diamond grinding stone of #120 to have an outside dimension of 152x152 mm so that the chamfer width would be from 0.2 to 0.4 mm.

Such sample substrates were subjected to preliminary polishing by the following method. Namely, firstly, a sample substrate was subjected to polishing of its main surface until the thickness became 6.63 mm, by means of a slurry having GC#400 (manufactured by FUJIMI INCORPORATED) made substantially of SiC as an abrasive suspended in an amount of from 18 to 20 mass% in filtered water, by using a 20B double side lapping machine manufactured by SPEEDFAM CO., LTD.

Further, by using a separate 20B double side lapping machine, the above sample substrate was polished until the thickness became 6.51 mm by means of a slurry having FO#1000 (manufactured by FUJIMI INCORPORATED) containing Al₂O₃ as the main component, as an abrasive, suspended in an amount of from 18 to 20 mass%. Thereafter, by means of a slurry composed mainly of cerium oxide, and a buff, the outer periphery of the sample substrate was polished for 30 µm for specular processing to have a surface roughness (Ra) of 0.05 µm.

Then, as primary polishing, such a sample substrate was polished for 50 µm in a total thickness of both sides by using a 20B double side polishing machine manufactured by SPEEDFAM CO., LTD. by means of LP66 (tradename, manufactured by Rhodes) as a polishing cloth and a slurry having MIREK 801A (tradename, manufactured by MITSUI MINING & SMELTING CO., LTD.) as an abrasive suspended in an amount of from 10 to 12 mass%.

Further, as secondary polishing, it was polished for 10 µm in a total thickness of both sides by using a 20B double side polishing machine by means of Ciegal 7355 (tradename, manufactured by Toray Coatex Co., Ltd.) as a polishing cloth and the above-mentioned MIREK 801A as the abrasive. Thereafter, simple washing was carried out. The (Rms) of such a preliminarily polished sample substrate was about 0.8 µm.

Then, 60 sheets of preliminarily polished sample substrates were divided into three groups each containing 20 sheets, and final polishing was carried out. Namely, for the first group, a polishing slurry comprising water and colloidal silica having a conventional average primary particle size, was used. For the second group, a polishing slurry having the pH adjusted to a prescribed value by adding nitric acid to the same polishing slurry containing water and colloidal silica as for the first group, was used. For the third group, a polishing slurry having the pH adjusted to the same level as for the second group by adding nitric acid to a polishing slurry comprising water and colloidal silica having the average primary particle size according to the present invention, was used. The method for preparing the polishing slurry for each group is shown in Table 1. The final polishing conditions other than the method for preparing the polishing slurries, are all the same for the respective groups and as follows.

### POLISHING CONDITIONS

Polishing test machine: Double side 24B polishing machine, manufactured by Hamai Sangyo K.K.
Polishing pad: Bellatrix K7512, manufactured by Kanebo, Ltd.
Polishing platen rotational speed: 35 rpm
Polishing time: 50 minutes
Polishing load: 80 g/cm²
Diluting water: Pure water (resistivity: 4.2 MΩ·cm, foreign particles of at least 0.2 µm filtered off)
Flow rate of slurry: 10 l/min

**TABLE 1**

| | | First group | Second group | Third group |
|---|---|---|---|---|
| Colloidal silica stock solution | | | | |
| | Average primary particle size | 62 to 80 nm | 62 to 80 nm | 10 to less than 20 nm |
| | pH of the stock solution | 10.2 | 10.2 | 10.2 |
| Content of colloidal silica in polishing slurry | | 20 mass% | 20 mass% | 20 mass% |
| pH of polishing slurry after adjustment | | Nil | 2 | 2 |

After the sample substrates were finally polished under the above conditions, they were washed by a multistage automatic washing machine constituted by a first tank for a solution of sulfuric acid and hydrogen peroxide solution at 90°C, a second tank for warm pure water for rinsing, a third tank as a washing tank by a neutral surfactant solution and for subsequent steps a rinsing tank by ultrapure water and a drying tank by IPA. The washed sample substrates were inspected by a surface defect inspection machine for photomasks, manufactured by Lasertec Corporation, and counting of the number of defects with widths of at least 60 nm within 142 mm × 142 mm, and judgment of concave or convex of the defects were carried out. Here, the respective defects were counted as divided into defects of from 60 to 150 nm and defects exceeding 150 nm, respectively.

Further, the surface roughness of the substrate was measured by an atomic force microscope SP13800N, manufactured by Seiko Instruments Inc. This measurement of the surface roughness of the atomic force microscope was carried by measuring an area of 10 µm × 10 µm at an optional one portion with respect to each sample substrate. The results of the measurements are shown in Table 2.

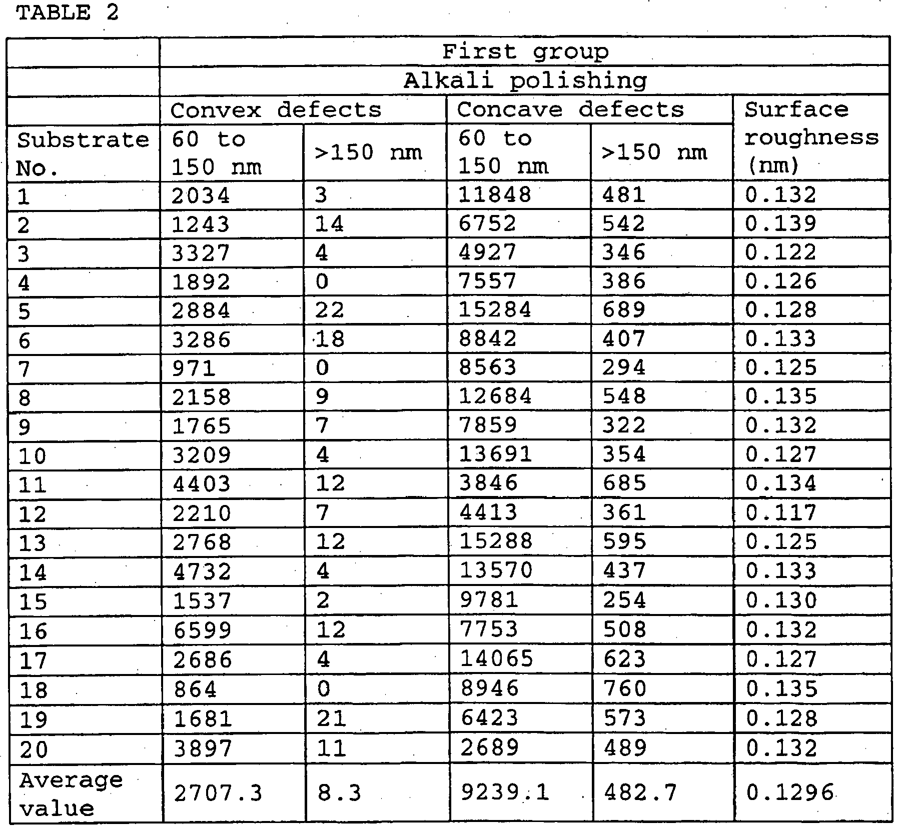

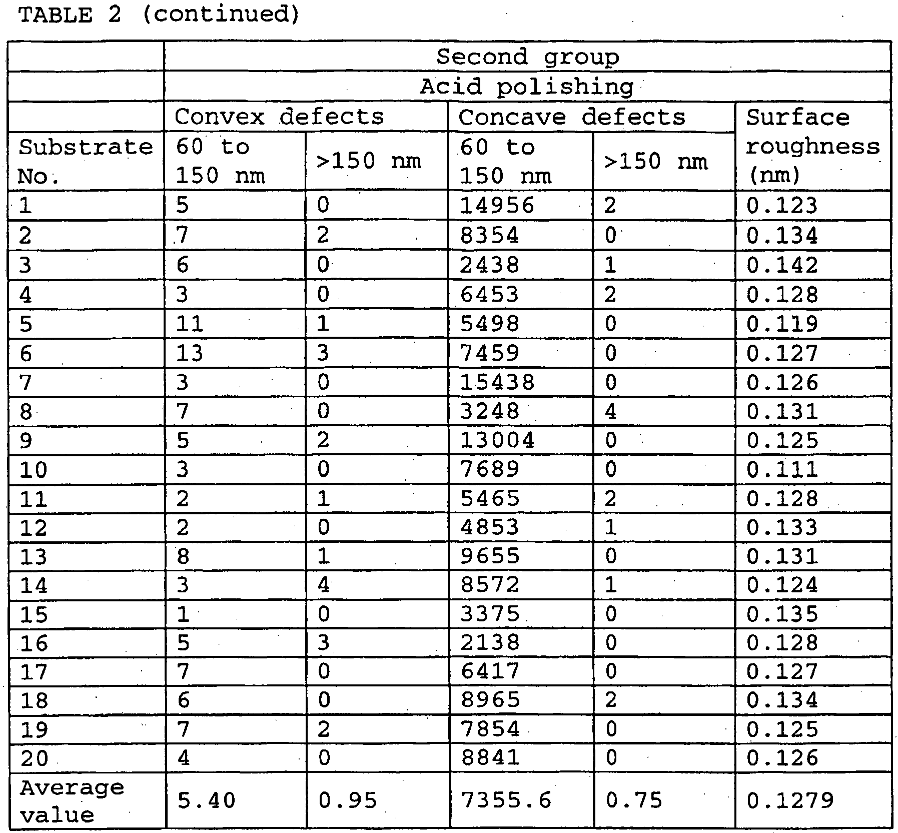

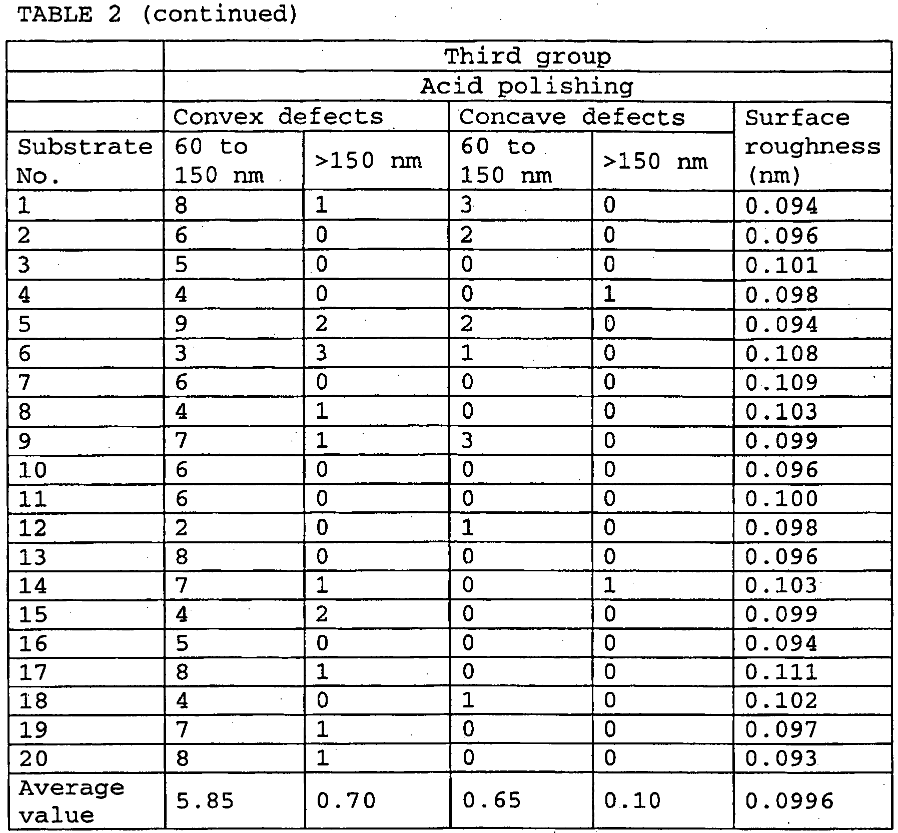

As is evident from Table 2, the sample substrates in the first group polished by the polishing slurry wherein the average primary particle size of.colloidal silica was from 62 to 80 nm and no adjustment of the pH was carried out, had a large number of concave defects and convex defects of at least 60 nm, and the average value of the surface roughness Rms was 0.1296 nm. On the other hand, with sample substrates in the second group polished with the polishing slurry having the pH of the polishing slurry of the first group adjusted to 2, the convex defects were found remarkably decreased, while the decrease of the concave defects of at least 60 nm was not so remarkable. However, the average value of the surface roughness Rms was substantially the same as in the first group, since the average primary particle size of colloidal silica was the same.

Whereas, with the sample substrates in the third group polished by the polishing method of the present invention, the concave defects were remarkably decreased, which was not realized with the sample substrates in the second group, and at the same time, the average value of the surface roughness Rms was remarkable small, as the polishing slurry was used wherein the average primary particle size of colloidal silica was from 10 to less than 20 nm, and the pH was adjusted to 2.

According to the present invention, a glass substrate can be polished to have a surface of high quality having extremely small surface roughness, and it is suitable for polishing a glass substrate for e.g. a reflective mask or a mirror to be used as an optical component of an exposure apparatus for the production of semiconductors for generations of 45 nm or thereafter.

## Claims

1. A polishing method for a glass substrate to be used for an optical component of an EUV-exposure apparatus for semiconductor production **characterized by** polishing a surface of a glass substrate containing SiO₂ as the main component, with a polishing slurry comprising water and colloidal silica having an average primary particle size of less than 20 nm and having the pH adjusted to be within a range of from 0.5 to 4, the content of the colloidal silica being from 10 to 30 mass% in the polishing slurry, so that the surface roughness Rms will be at most 0.15 nm as measured by an atomic force microscope, wherein the surface of a glass substrate is preliminarily subjected to preliminary polishing and thereafter subjected to final polishing with said polishing slurry, and wherein the polishing is carried out so that the number of concave defects with widths of at least 60 nm will be not more than 3 within an area of 142 mm × 142 mm.

2. A polishing method for a glass substrate to be used for an optical component of an EUV-exposure apparatus for semiconductor production according to claim 1, with a polishing slurry having the pH adjusted to be within a range of from 1 to 4.

3. The polishing method for a glass substrate to be used for an optical component of an EUV-exposure apparatus for semiconductor production according to Claim 1 or 2, wherein the polishing slurry further comprises an acid.

4. The polishing method for a glass substrate to be used for an optical component of an EUV-exposure apparatus for semiconductor production according to any one of Claims 1 to 3, wherein the water is pure water or ultrapure water wherein the number of fine particles of at least 0.1 µm as measured by a light scattering system employing a laser beam or the like, is substantially at most 1/ml.

5. The polishing method for a glass substrate to be used for an optical component of an EUV-exposure apparatus for semiconductor production according to any one of Claims 1 to 4, wherein the glass substrate after polishing with the polishing slurry, is washed with a hot solution of sulfuric acid and hydrogen peroxide solution and further with a neutral surfactant solution.

6. A glass substrate containing SiO₂ as the main component, polished by the polishing method as defined in any one of Claims 1 to 5.

## Patentansprüche

1. Polierverfahren für ein Glassubstrat, das für eine optische Komponente einer EUV-Aussetzungsvorrichtung zur Halbleiterherstellung verwendet wird, **gekennzeichnet durch** das Polieren einer Oberfläche eines Glassubstrats, enthaltend SiO₂ als die Hauptkomponente, mit einer Polieraufschlämmung, umfassend Wasser und kolloidales Silica mit einer durchschnittlichen primären Teilchengröße von weniger als 20 nm und mit dem pH, eingestellt innerhalb eines Bereichs von 0,5 bis 4 zu sein, wobei der Anteil des kolloidalen Silicas von 10 bis 30 Masse-% in der Polieraufschlämmung ist, so daß die Oberflächenrauhigkeit Rms höchstens 0,15 nm sein wird, gemessen **durch** ein Atomkraftmikroskop, wobei die Oberfläche eines Glassubstrats einem vorbereitenden Polieren vorbereitend unterworfen wird und anschließend einem finalen Polieren mit der Polieraufschlämmung unterworfen wird, und wobei das Polieren derart durchgeführt wird, daß die Anzahl an konkaven Defekten mit Breiten von mindestens 60 nm nicht mehr als 3 innerhalb eines Bereichs von 142 mm × 142 mm sein wird.

2. Polierverfahren für ein Glassubstrat, das für eine optische Komponente einer EUV-Aussetzungsvorrichtung zur Halbleiterherstellung verwendet wird, gemäß Anspruch 1, mit einer Polieraufschlämmung mit dem pH eingestellt innerhalb eines Bereichs von 1 bis 4.

3. Polierverfahren für ein Glassubstrat, das für eine optische Komponente einer EUV-Aussetzungsvorrichtung zur Halbleiterherstellung verwendet wird, gemäß Anspruch 1 oder 2, wobei die Polieraufschlämmung weiter eine Säure umfaßt.

4. Polierverfahren für ein Glassubstrat, das für eine optische Komponente einer EUV-Aussetzungsvorrichtung zur Halbleiterherstellung verwendet wird, gemäß einem der Ansprüche 1 bis 3, wobei das Wasser reines Wasser oder ultrareines Wasser ist, wobei die Anzahl an feinen Teilchen mindestens 0,1 µm, gemessen durch ein Lichtstreusystem, welches einen Laserstrahl oder dergleichen einsetzt, im wesentlichen höchstens 1/ml ist.

5. Polierverfahren für ein Glassubstrat, das für eine optische Komponente einer EUV-Aussetzungsvorrichtung zur Halbleiterherstellung verwendet wird, gemäß einem der Ansprüche 1 bis 4, wobei das Glassubstrat nach dem Polieren der Polieraufschlämmung mit einer heißen Lösung von Schwefelsäure und Wasserstoffperoxidlösung und anschließend mit einer neutralen Lösung von grenzflächenaktivem Mittel gewaschen wird.

6. Glassubstrat, enthaltend SiO₂ als die Hauptkomponente, poliert durch das Polierverfahren, wie in einem der Ansprüche 1 bis 5 definiert.

## Revendications

1. Procédé de polissage pour un substrat de verre à utiliser pour un composant optique d'un appareil d'exposition EUV pour une production de semiconducteurs, **caractérisé par** le polissage d'une surface d'un substrat de verre contenant du SiO₂ comme composant principal, avec une boue de polissage comprenant de l'eau et de la silice colloïdale ayant une taille de particule primaire moyenne inférieure à 20 nm et dont le pH est ajusté pour être dans une plage de 0,5 à 4, le contenu de la silice colloïdale constituant de 10 à 30 % en masse de la boue de polissage, de sorte que l'écart-type de rugosité de surface soit au plus de 0,15 nm en mesure par un microscope de force atomique, dans lequel la surface d'un substrat de verre est préalablement soumise à un polissage préliminaire puis est soumise à un polissage final avec ladite boue de polissage, et dans lequel le polissage est effectué de sorte que le nombre de défauts concaves avec des largeurs d'au moins 60 nm ne soit pas supérieur à 3 dans une zone de 142 mm × 142 mm.

2. Procédé de polissage pour un substrat de verre à utiliser pour un composant optique d'un appareil d'exposition EUV pour une production de semiconducteurs selon la revendication 1, dans lequel le pH d'une boue de polissage est ajusté pour être dans une plage de 1 à 4.

3. Procédé de polissage pour un substrat de verre à utiliser pour un composant optique d'un appareil d'exposition EUV pour une production de semiconducteurs selon la revendication 1 ou 2, dans lequel la boue de polissage comprend en outre un acide.

4. Procédé de polissage pour un substrat de verre à utiliser pour un composant optique d'un appareil d'exposition EUV pour une production de semiconducteurs selon l'une quelconque des revendications 1 à 3, dans lequel l'eau est de l'eau pure ou de l'eau ultra-pure dans laquelle le nombre de particules fines d'au moins 0,1 µm en mesure par un système de dispersion de lumière employant un faisceau laser ou un élément similaire, est sensiblement d'au plus 1/ml.

5. Procédé de polissage pour un substrat de verre à utiliser pour un composant optique d'un appareil d'exposition EUV pour une production de semiconducteurs selon l'une quelconque des revendications 1 à 4, dans lequel le substrat de verre après le polissage avec la boue de polissage est lavé avec une solution chaude d'acide sulfurique et une solution de peroxyde d'hydrogène et en outre avec une solution de surfactant neutre.

6. Substrat de verre contenant du SiO₂ comme composant principal, poli par le procédé de polissage selon l'une quelconque des revendications 1 à 5.
